# EUROPÄISCHE PATENTSCHRIFT

(11) **EP 2 082 299 B1**
(45) Veröffentlichungstag und Bekanntmachung des Hinweises auf die Patenterteilung: **24.11.2010**
(21) Anmeldenummer: 07821081.2
(22) Anmeldetag: 09.10.2007
(51) Int. Cl.: G05B 19/418, G06F 9/445

(54) **VERFAHREN ZUR DURCHFÜHRUNG VON ONLINE-PROGRAMMÄNDERUNGEN AN EINEM AUTOMATISIERUNGSSYSTEM**
METHOD FOR CARRYING OUT ONLINE PROGRAM CHANGES ON AN AUTOMATION SYSTEM
PROCÉDÉ D'EXÉCUTION DE MODIFICATIONS DE PROGRAMME EN LIGNE SUR UN SYSTÈME D'AUTOMATISATION

(30) Priorität: 26.10.2006 EP 06022427
(43) Veröffentlichungstag der Anmeldung: 29.07.2009
(73) Patentinhaber: SIEMENS AKTIENGESELLSCHAFT, 80333 München (DE)
(72) Erfinder: DREBINGER, Andreas, 91074 Herzogenaurach (DE); SCHINDLER, Jürgen, 91056 Erlangen (DE); ZINGRAF, Jochen, 90587 Obermichelbach (DE)
(86) Internationale Anmeldenummer: PCT/EP2007/060712
(87) Internationale Veröffentlichungsnummer: WO 2008/049727

(56) Entgegenhaltungen:
- EP-A- 1 300 874
- EP-A- 1 705 566
- US-A- 5 970 243
- US-A- 6 141 683

## Beschreibung

### Hintergrund der Erfindung

Die Erfindung betrifft ein Verfahren zur Durchführung von Online-Programmänderungen an einem Automatisierungssystem, bei dem eine Online-Programmänderung dadurch vorgenommen wird, dass in eine CPU des Automatisierungssystems, in die ein aktuell laufendes Anwenderprogramm geladen ist, neue Programmteile geladen werden, um ein neues Anwenderprogramm bereitzustellen, und bei dem auf das neue Anwenderprogramm erst nach einer Überwachung einer ersten Abarbeitung aller Programmzyklen des neuen Anwenderprogramms umgeschaltet wird.

Eine prozesstechnische Anlage, die beispielsweise in Kraftwerksanlagen zum Einsatz kommt, wird meistens aus einem Verbund von vielen Steuerungs- und Regelungssystemen automatisiert. Diese Systeme sind einzelnen Anlagenbereichen zugeordnet. Trotz dieser Strukturierung in einzelne Automatisierungsbereiche kann eine gegenseitige Beeinflussung nie verhindert werden. So kann der Ausfall eines einzigen Automatisierungssystems zum Ausfall der gesamten Anlage führen.

Neben den Ausfällen, verursacht durch Hardware-Fehler, die z. B. durch entsprechende Redundanzen weitestgehend vermieden werden können, kann es durch Online-Programmänderungen ebenfalls zu Überlastungen von Automatisierungssystemen kommen.

Online-Programmänderungen sind insbesondere während der Inbetriebnahme oder Anlagenerweiterung im laufenden Betrieb notwendig. Hierbei ist das Risiko einer CPU-Überlastung eines Automatisierungssystems auf ein Minimum zu reduzieren, bei gleichzeitiger optimaler Ausnutzung der CPU-Resourcen.

Ein Automatisierungssystem arbeitet meistens zyklusbasiert. Das heißt, dass das Anwenderprogramm auf unterschiedlich schnelle Zyklen verteilt ausgeführt wird. Überschreitet nun die Ausführungszeit der einzelnen Programmteile die jeweilige Zykluszeit, kommt es zu einer CPU-Uberlastung. Die Auswirkungen reichen von einem unsauberen Regelverhalten bzw. Echtzeitverhalten bis hin zum Stopp des gesamten Automatisierungssystems.

Bisher wurde meistens nur die statische Aufnahmefähigkeit einer CPU vor bzw. während des Ladens überprüft. Das bedeutet, dass der Speicherbedarf der neuen Programmteile mit dem noch verfügbaren Speicher in der CPU verglichen wurde. Zum Überprüfen der dynamischen Aufnahmefähigkeit sind jedoch weitere Maßnahmen nötig. Ferner kann die CPU-Auslastung offline errechnet werden. Hierfür werden alle Einzelfunktionen eines Anwenderprogramms unter Berücksichtigung ihres Ablauf-Zyklus aufsummiert. Des weiteren sind Größen wie System- und Kommunikationsbelastung hinzu zu rechnen. Dabei kann es zu größeren Ungenauigkeiten kommen, weshalb eine höhere Reserve eingeplant werden muss, mit einer einhergehenden geringeren Ausnutzung der CPU. Ferner ist die manuelle Kalkulation sehr zeitintensiv und fehlerträchtig. Um dies zu vermeiden, muss eine Kalkulationslösung zusätzlich entwickelt und gepflegt werden. So ist es z. B. nötig, von neuen bzw. geänderten Anwender-Funktionen die typische Laufzeit zu ermitteln und diese in das Kalkulationstool einzupflegen.

Auch die System- und Kommunikationsbelastung eines Automatisierungssystems kann nicht hinreichend genau errechnet werden, da diese Größen von vielen und für den Anwender meistens nicht sichtbaren Parametern abhängen. Typische Einflussgrößen sind unter anderem:
- Aktualisierung des Prozessabbilds der Ein- und Ausgänge,
- Zyklische Alarmbearbeitung,
- Kommunikationsfunktionen, und
- Betriebssystembearbeitung.

Sind dann alle präventiven Überprüfungen, falls vorhanden, positiv verlaufen, werden die neuen Programmteile in die laufende CPU geladen und ausgeführt. Dabei kann nie ausgeschlossen werden, dass es zu Überlastungen der CPU, infolge von zuviel geladenem Anwenderprogramm, kommt. Dies führt dann zu Zykluszeitüberläufen, die zwar gemeldet werden, aber dem Anwender meistens nicht mehr die Zeit bleibt, die letzte Änderung rückgängig zu machen. In vielen Situationen führt eine wiederholte Zykluszeit-Überschreitung zum Stopp-Zustand des gesamten Automatisierungssystems. Aus der EP 1 300 874 A1 ist bekannt, einen derartigen Stopp-Zustand bei Überlastung der CPU gezielt herbeizuführen.

Aus der US 5,970,243 ist ferner bekannt, zur Vermeidung eines Stopp-Zustandes vor einer Umschaltung auf ein aktualisiertes Anwenderprogramm zunächst eine Überwachung einer ersten Abarbeitung aller Programmzyklen des neuen Anwenderprogramms durchzuführen.

Der Erfindung liegt die Aufgabe zugrunde, ein Verfahren zur Durchführung von Online-Programmänderungen an einem Automatisierungssystem anzugeben, mit dem ein durch CPU-Überlastungen bedingtes unsauberes Regelverhalten bzw. Echtzeitverhalten, das schlechtestenfalls zu einem Stopp des gesamten Automatisierungssystems führt, sicher und technisch besonders einfach erkannt und vermieden werden kann.

Diese Aufgabe ist erfindungsgemäß dadurch gelöst, dass erst dann endgültig auf das neue Anwenderprogramm umgeschaltet wird, nachdem nach der Überwachung der ersten Abarbeitung aller Programmzyklen des neuen Anwenderprogramms keine Überlastung der CPU erkannt wurde.

Mittels des erfindungsgemäßen Verfahrens kann eine Online-Programmänderung auf eine Weise realisiert werden, dass eine eventuelle Überlastsituation erst gar nicht entsteht. Mittels der erfindungsgemäß vorgesehenen Überwachung einer ersten Abarbeitung aller Programmzyklen des neuen Anwenderprogramms kann unmittelbar nach einem ersten, vorläufigen Umschalten auf das neue Anwenderprogramm eine eventuelle Überlastung der CPU rechtzeitig erkannt und auf die ursprüngliche Programmversion zurückgeschaltet werden, so dass eine Anwenderreaktion nicht erforderlich ist. Die Überwachung wird hierbei vorzugsweise vom Betriebssystem des Automatisierungsgeräts vorgenommen, wobei der Überwachungszeitraum vorzugsweise vom langsamsten Zyklus bzw. dem Zyklus mit der kleinsten Priorität bestimmt wird.

Insgesamt betrachtet kann mittels des erfindungsgemäßen Verfahrens die Stabilität bei Online-Programmänderungen deutlich erhöht werden. Ferner können die CPU-Resourcen optimal ausgenutzt werden.

Bei einer praktischen Ausführungsform des erfindungsgemäßen Verfahrens, das insbesondere bei Systemen von Vorteil ist, bei denen das Automatisierungssystem mit einem Engineeringsystem kommuniziert, das in der Regel über eine graphische Schnittstelle eine Anwender-Prozessführung der zu steuernden/regelnden Prozesse des Automatisierungssystems ermöglicht, wird bei Erkennung einer Überlastung der CPU eine negative Quittung an das Engineeringsystem gesendet, um eine Zurückschaltung auf das ursprüngliche Anwenderprogramm zu signalisieren. Erfindungsgemäß schaltet das Automatisierungssystem also bei Erkennung einer Überlastung der CPU auf das ursprüngliche Anwenderprogramm zurück und signalisiert dies mit einer negativen Quittung dem Engineeringsystem. Auf diese Weise kann erfindungsgemäß koordiniert auf die vorherige Programmversion zurückgeschaltet werden. Der gesamte Online-Änderungsvorgang wird somit als nicht erfolgreich gewertet und dem Anwender vorzugsweise in einer geeigneten Reaktion mitgeteilt. Erfindungsgemäß ist hierbei vorzugsweise sicherzustellen, dass die Überwachungsfunktion selbst im Überlast-Fall ordnungsgemäß arbeitet, was beispielsweise dadurch realisiert werden kann, dass der Überwachungsfunktion eine hinreichend hohe Priorität zugeordnet wird.

In dem Fall, wo keine Überlastung der CPU erkannt wurde, wird von dem Automatisierungssystem eine positive Quittung an das mit dem Automatisierungssystem kommunizierende Engineeringsystem gesendet, um eine endgültige Umschaltung auf das neue Anwenderprogramm zu signalisieren und somit den Online-Änderungsvorgang erfolgreich abzuschließen.

Nachfolgend wird das erfindungsgemäße Verfahren anhand schematischer Darstellungen erläutert, wobei
- FIG 1: eine schematische Darstellung der Arbeitsweise eines Automatisierungssystems ist, und
- FIG 2: eine schematische Darstellung des erfindungsgemäßen Verfahrens in Form eines Blockdiagramms ist.

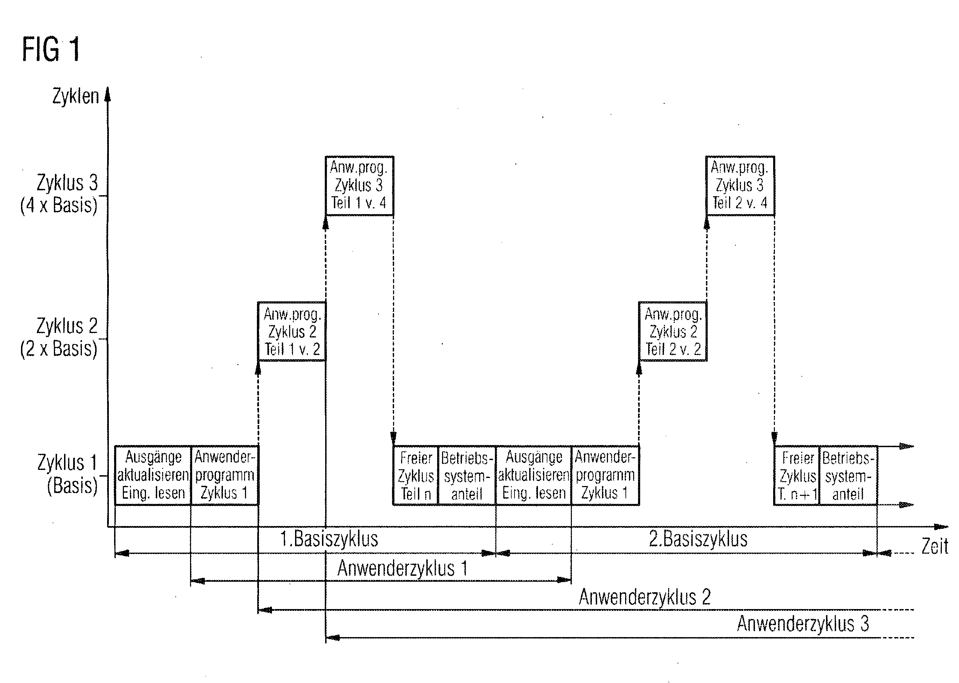

FIG1 zeigt schematisch die Arbeitsweise eines Automatisierungssystems in Form eines zyklisch arbeitenden Steuerungs- bzw. Regelungssystems. Es basiert auf einem Basiszyklus mit folgenden Abschnitten innerhalb eines festen Zeitrasters:
- Ausgänge aktualisieren / Eingänge lesen,
- Anwenderprogramm im Zyklus 1,
- Anwenderprogrammteil im Zyklus 2,
- Anwenderprogrammteil im Zyklus 3,
- ...,
- Anwenderprogrammteil im Zyklus n,
- Freier Zyklus, und
- Betriebssystemanteil.

Das Anwenderprogramm im Zyklus 1 wird jedes Mal komplett durchlaufen. Die Anwenderprogramme in den höheren Zyklen sind auf mehrere, möglichst gleich große Teile aufgeteilt, von denen jeweils einer pro Basiszyklus bearbeitet wird. So besteht das Anwenderprogramm im Zyklus 2 aus 2 Teilen, das im Zyklus 3 aus 4 Teilen und so weiter.
Zu einer Überlastsituation kann es nun kommen, wenn die Summe der Laufzeit aller Komponenten eines Basiszyklus größer ist als dessen eingestellte Zykluszeit.

Ein Teil der verbleibenden Zeit, die nach Abarbeitung des Anwenderprogramms in allen festen Zyklen noch zur Verfügung steht, wird für den freien Zyklus, der mit niedrigerer Priorität abgearbeitet wird, verwendet. Auch dieser Zyklus unterliegt einer Zeitüberwachung und muss ebenfalls in die Überlastüberwachung bei Online-Änderungen mit einbezogen werden. Ein weiterer Teil der verbleibenden Zeit umfasst einen Betriebssystemanteil für die Kommunikation mit dem Betriebssystem.

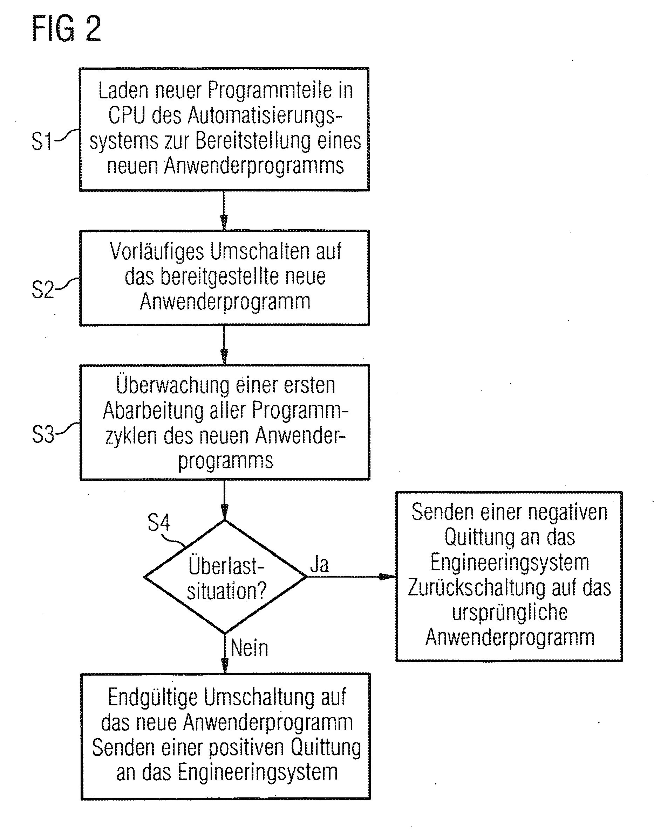

Nachfolgend erfolgt eine Erläuterung des erfindungsgemäßen Verfahrens anhand des in FIG 2 dargestellten Blockdiagramms.

Werden über ein Engineeringsystem, das mit dem Automatisierungssystem kommuniziert, im Rahmen einer Online-Änderung neue Programmteile in die CPU des Automatisierungssystem geladen (vgl. Schritt S1 in FIG 2), erfolgt zunächst ein vorläufiges Umschalten auf das durch Ladung neuer Programmteile bereitgestellte neue Anwenderprogramm (vgl. Schritt S2 in FIG 2). Hierbei ist das Automatisierungssystem erfindungsgemäß dazu ausgebildet, die neuen Programmteile neben einem noch aktuell laufenden Anwenderprogramm zu laden und die Ausführung der Programmteile vorzubereiten, aber noch nicht auszuführen. Die vorläufige Umschaltung dient dazu, eine Überwachung (vgl. Schritt S3 in FIG 2) einer ersten Abarbeitung aller Programmzyklen des neuen Anwenderprogramms vorzunehmen. Hierbei ist das neue Anwenderprogramm aktiv, wobei vorzugsweise zusätzlich jeweils der erste Zyklus überwacht wird. Ferner wird der Überwachungszeitraum vorzugsweise vom langsamsten Zyklus bzw. dem Zyklus mit der kleinsten Priorität bestimmt. Wird innerhalb des Überwachungszeitraums kein Zeitüberlauf vom Betriebssystem des Automatisierungssystems erkannt, so kann eine positive Quittung an das Engineeringsystem gesendet werden, um diesem eine bereits vorgenommene endgültige Umschaltung auf das neue Anwenderprogramm zu signalisieren. Bei Erkennung einer Überlastsituation hingegen schaltet das Automatisierungssystem zunächst auf das ursprüngliche Anwenderprogramm zurück und übermittelt dem Engineeringsystem anschließend eine negative Quittung, um diesem eine Zurückschaltung auf das ursprüngliche Anwenderprogramm zu signalisieren (vgl. Schritt S4 in FIG 2).

Das erfindungsgemäße Verfahren kann programmtechnisch vorzugsweise in der Programmiersprache STEP7 realisiert und in ein Leitsystem des Typs SPPA-T3000 V2.0 integriert werden, wobei als Automatisierungsplattform eine Plattform des Typs SIMATIC S7 zum Einsatz kommen kann.

## Patentansprüche

1. Verfahren zur Durchführung von Online-Programmänderungen an einem Automatisierungssystem, bei dem eine Online-Programmänderung **dadurch** vorgenommen wird, dass in eine CPU des Automatisierungssystems, in die ein aktuell laufendes Anwenderprogramm geladen ist, neue Programmteile geladen werden (S1), um ein neues Anwenderprogramm bereitzustellen, und bei dem auf das neue Anwenderprogramm erst nach einer Überwachung (S3) einer ersten Abarbeitung aller Programmzyklen des neuen Anwenderprogramms umgeschaltet wird (S2),
**dadurch gekennzeichnet, dass**
erst dann endgültig auf das neue Anwenderprogramm umgeschaltet wird, nachdem nach der Überwachung (S3) der ersten Abarbeitung aller Programmzyklen des neuen Anwenderprogramms keine Überlastung der CPU erkannt wurde (S4).

2. Verfahren nach Anspruch 1, **dadurch gekennzeichnet, dass** von dem Automatisierungssystem bei Erkennung einer Überlastung der CPU eine negative Quittung an ein Engineeringsystem, mit dem das Automatisierungssystem kommuniziert, gesendet wird, um eine Zurückschaltung auf das ursprüngliche Anwenderprogramm zu signalisieren.

3. Verfahren nach Anspruch 1, **dadurch gekennzeichnet, dass** nachdem keine Überlastung der CPU erkannt wurde von dem Automatisierungssystem eine positive Quittung an ein Engineeringsystem, mit dem das Automatisierungssystem kommuniziert, gesendet wird, um eine endgültige Umschaltung auf das neue Anwenderprogramm zu signalisieren.

## Claims

1. Method for performing online program changes on an automation system, wherein an online program change is performed by loading new program sections into a CPU of the automation system in which a currently running user program is loaded in order to provide a new user program (S1), and wherein a switchover to the new user program takes place (S2) only after a first execution of all program cycles of the new user program has been monitored (S3),
**characterised in that**
a definitive switchover to the new user program is performed only after no overload of the CPU has been detected (S4) following the monitoring (S3) of the first execution of all program cycles of the new user program.

2. Method according to claim 1, **characterised in that** if an overload of the CPU is detected a negative acknowledgment is sent by the automation system to an engineering system with which the automation system communicates, in order to signal a switch back to the original user program.

3. Method according to claim 1, **characterised in that** if no overload of the CPU has been detected a positive acknowledgment is sent by the automation system to an engineering system with which the automation system communicates, in order to signal a definitive switchover to the new user program.

## Revendications

1. Procédé pour effectuer des modifications de programme en ligne sur un système d'automatisation, dans lequel on effectue une modification de programme en ligne en chargeant ( S1 ) de nouvelles parties de programme dans une CPU du système d'automatisation, dans laquelle un programme d'utilisateur en cours actuellement est chargé, pour mettre à disposition un nouveau programme d'utilisateur, et dans lequel on passe ( S2 ) au nouveau programme d'utilisateur, seulement après un contrôle d'une première exécution de tous les cycles du nouveau programme d'utilisateur,
**caractérisé en ce que**
on passe finalement au nouveau programme d'utilisateur seulement quand, après que le contrôle ( S3 ) de la première exécution de tous les cycles du nouveau programme d'utilisateur, il n'a pas été détecté ( S4 ) de surcharge de la CPU.

2. Procédé suivant la revendication 1, **caractérisé en ce qu'**il est émis par le système d'automatisation, lors de la détection d'une surcharge de la CPU, un accusé de réception négatif vers un système d'ingénierie, avec lequel le système d'automatisation communique, pour signaler un retour au programme d'utilisateur d'origine.

3. Procédé suivant la revendication 1, **caractérisé en ce que**, après qu'une surcharge de la CPU n'a pas été détectée, il est envoyé par le système d'automatisation un accusé de réception positif vers un système d'ingénierie, avec lequel le système d'automatisation communique, pour signaler un passage définitif au nouveau programme d'utilisateur.
